# EUROPEAN PATENT APPLICATION

(11) **EP 0 800 965 A2**
(43) Date of publication of application: **15.10.1997**
(21) Application number: 97302292.4
(22) Date of filing: 03.04.1997
(51) Int. Cl.: B60R 21/26

(54) **Hybrid adaptive inflator for airbags**

(30) Priority: 09.04.1996 US 629695
(71) Applicant: MORTON INTERNATIONAL, INC., Chicago, Illinois 60606 (US)
(72) Inventor: Buchanan, Eric Scott, North Ogden, Utah 84414 (US); Woodbury, Mark Budge, North Salt Lake, Utah 84054 (US); Rink, Linda Marie, Liberty, Utah 84310 (US)
(74) Representative: Johnstone, Douglas Ian

(57) **Abstract**

A method and apparatus for adaptively inflating a vehicle occupant restraint airbag. The method involves providing an inflator (10) having upper and lower hemispherical housing parts (12, 14) which contain pressurized inert gas in a main chamber (18) and first and second heating devices (32, 34). A gas exit orifice (20) in the upper housing part (12) is closed by a burst disc (22) and covered by a diffuser (24) with ports (26). Upon sensing a collision, activating means activate the first heating device (32) causing heated compressed gas to rupture the disc and leave the inflator. Thereafter, the secnd heating device (34) is activated and provides further heat input to inert gas beyond the main chamber. Gas beyond the main chamber quenches that poduced by the second heating device (34) and prevents it from burning the associated airbag. The heating devices may include a pyrotechnic, a fluid fuel and an oxidizer.

## Description

The present invention relates in general to passive restraint airbag systems. In particular, the present invention relates to an improved hybrid inflator for airbag systems providing adaptive performance and having a spherical shape which may be used in a driver side position.

In airbag systems there is typically a cushion which, upon a collision, is inflated to provide protective cushioning to the passenger. To inflate the cushion such systems employ an inflator to produce a quantity of inflation gas. Various inflators operating upon different principles are known. For each operating principle, there is a slight difference in performance such as the rise and fall of pressure in the cushion over time. As such, for different applications, inflators operating on different principles are preferred.

One known class of inflator is referred to as hybrid. In hybrid inflators, there is a pressure vessel containing a quantity of pressurized inert gas. To fill a cushion simply with stored gas would require a large quantity of the gas, resulting in a large pressure vessel. To reduce size and weight, hybrid inflators exploit the principle that the pressure of a gas increases with temperature. Therefore, hybrid inflators include various types of heaters which heat the gas before it is released from the inflator. This permits a lesser quantity of gas to be stored, greatly reducing inflator size.

Even with this size reduction, hybrid inflators have typically been rather large. As such, they have typically been used for passenger-side protection, where relatively large spaces are available behind the vehicle dashboard to store the inflator. Providing a hybrid inflator which is sufficiently small to be mounted to a steering wheel for driver side protection has been more difficult.

Additionally, there has been a growing desire to provide adaptive airbag systems. Adaptive systems tailor airbag performance to various criteria, such as ambient temperature (which affects gas pressure as noted above), severity of the collision, position of the passenger, etc. As an example, an adaptive airbag system could sense whether the collision is moderate or serious. If the collision is moderate, lower pressure gas is used to inflate the cushion. If the collision is serious, higher pressure gas is used, providing a "harder" cushion to provide the increased protection required.

While such adaptive systems are desirable, they typically require additional components on the inflator, increasing its size. As such it has been even more difficult to provide an adaptive hybrid inflator which will meet the size requirements for vehicles, especially for driver side applications.

An object of the present invention is to provide an adaptive hybrid inflator which reliably provides gas to a protective cushion.

Another object of the present invention is to provide such an inflator having a small size, to reduce the space occupied by the inflator in the vehicle cabin.

Yet another object of the present invention is to provide such an inflator which is sufficiently small for use mounted upon a steering wheel for driver side protection.

These and other objects are achieved by a hybrid adaptive airbag inflator. The inflator includes a main chamber containing a quantity of stored inert gas. The chamber additionally includes two separate heating devices to heat the stored gas. To provide adaptive performance, one, or the other, or both of the heating devices may be fired, depending upon the severity of the collision. The heated stored gas increases in pressure and breaks free of the chamber to inflate the cushion. If both heating devices are fired, there may be a time delay between firing, and this delay may be greater than the time required for the gas to begin exiting the chamber. As such, the second heating device may fire after the partially heated gas has flowed from the chamber.

The objects and features of the invention noted above are explained in more detail with reference to the drawings, in which like reference numerals denote like elements, and in which:
Fig. 1 is a cross-sectional side view of an inflator according to the invention; and
Fig. 2 is a side view in partial cross-section of an airbag system employing an inflator according to the present invention; and
Figs. 3-5 are graphs indicating expected performance of the inflator according to the present invention.

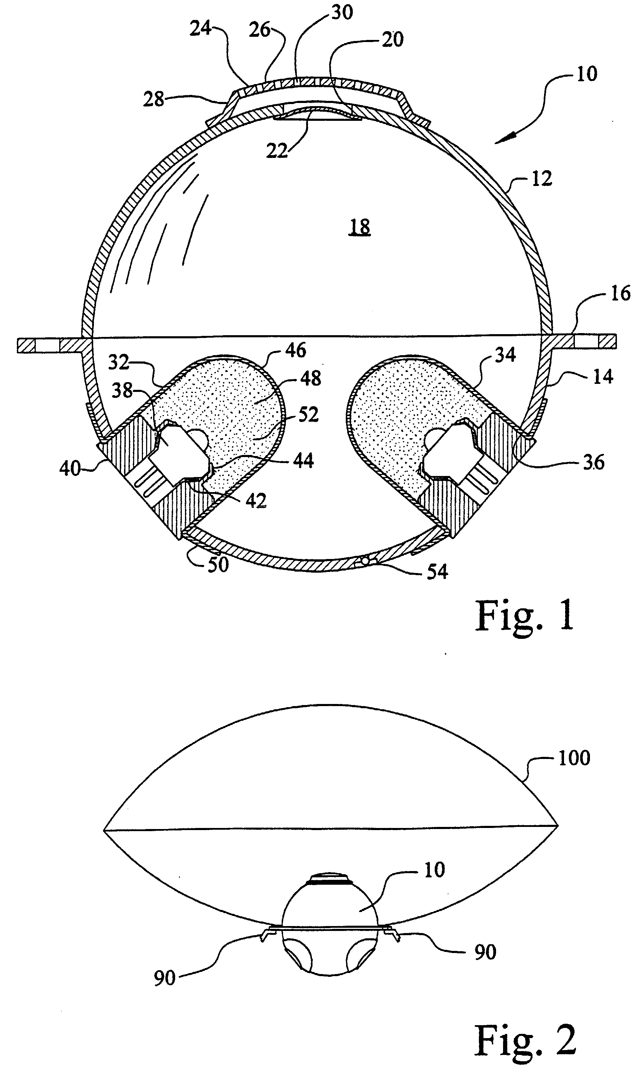

With reference to Fig. 1, an inflator according to the present invention is generally designated by reference numeral 10. The inflator 10 is employed in an airbag system as shown in Fig. 2. As may be seen, the inflator 10 is mounted to an appropriate portion 90 of a vehicle. A flexible fabric cushion 100 is also mounted to the vehicle portion 90 (directly or via the inflator 10) with its mouth encompassing the inflator. As is known in the art, the gas produced by the inflator 10 will flow into the cushion 100 to inflate the cushion.

The inflator 10 preferably takes the general form of a sphere, and includes a housing including an upper hemisphere 12 and a lower hemisphere 14. These hemispheres are secured together, as by welding about their intersection. As shown, one or the other of the hemispheres may include a peripheral mounting flange 16 for securing the inflator to the vehicle. Forms other than spherical may be employed. However, the spherical form is preferred because, among solid shapes, a sphere has the smallest surface area per volume, reducing the amount of material required to form the housing.

The housing defines an interior or main chamber 18. The chamber contains a quantity of pressurized inert gas. While various gasses may be employed, argon is preferred for reasons discussed more fully below. The storage of pressurized gas is a further reason for the preferred spherical form of the housing. Specifically, the spherical form provides a very strong pressure vessel compared to other shapes, and the spherical housing may therefore accept higher pressures than other forms. As such, a spherical housing may store more of the inert gas compared to other shapes having an equal volume. Since a predetermined quantity of stored gas will be required to inflate a particular cushion, a smaller volume (and therefore a smaller housing) may be used with a spherical housing.

The housing includes an exit orifice 20 extending therethrough which provides communication between the main cavity and the cushion 100. Since it is desired to maintain the stored gas in the housing until a collision is sensed, the exit orifice is closed by a burst disc 22. As is known in the art, such burst discs are designed to withstand the pressure of the stored gas under normal circumstances. Upon activation of the inflator 10, however, the pressure within the main chamber will rise, and the burst disc is designed to fail at a predetermined pressure reached after activation. The rupture of the burst disc 22 permits the stored gas to flow through the exit orifice to the cushion.

While the housing could simply include the exit orifice and burst disc, it is preferred to provide a diffuser 24 to spread the inflation gas. As shown, the diffuser may simply consist of an outer wall 26 spaced from the associated hemisphere by a peripheral wall 28. A plurality of diffuser ports 30 may be provided in the outer wall 26 as show, or in the peripheral wall to provide a thrust neutral design. Alternatively, the diffuser may be a plate (not shown) having dimples formed about the peripheral edge such that the edge is sinuous. These dimples would then abut against the associated hemisphere to space the plate from the exit port, and the dimples could be welded to the hemisphere. The raised sections of the dimples would then form the diffuser ports.

Within the main chamber there is a first heating device 32 and a second heating device 34. In general, the heating devices 32 and 34 may be any known device which will produce a quantity of heat within a sufficiently short period of time to heat the stored gas to raise its pressure for use in protecting a vehicle occupant during a collision. Each of these heating devices correspond to a heating device means. Each of the heating devices is mounted to the housing through an associated mounting hole 36. Further, each heating device will include an appropriate electrical connector accessible from the exterior of the housing for connection to a controller (not shown) which provides signals to activate the heating devices, and thus activate the inflator. The heating device may take the form of a known pyrotechnic initiator 38, mounted to a holder 40. As is known in the art, such a holder will have a mounting surface 42 which mates with a portion of the initiator 38, and a crimp section 44 which will initially extend outward to permit placement of the initiator against the mating surface, and which is then crimped over to secure the initiator against the mating surface, as shown in Fig. 1. The holder may then be secured to the housing, such as by welding, to fix the heating device in position.

While this may be acceptable, many common initiators are formed of plastic, and would not withstand the pressure in the main chamber. As such, the stored inert gas in the main chamber would break the initiator and flow out through the resulting opening in holder 40. To prevent this, it is preferred that the heating devices be formed of a rugged material which will withstand the pressure, or that the heating devices be isolated from the pressure, such as by a barrier shell 46. As shown, the barrier shell takes the form of a concave member formed of gas-impermeable material, such as metal, having an interior 48. In the preferred form, the shell takes the general form of a dome, or partial sphere, to better accept the pressure of the stored inert gas. The shell is placed over the initiator 38, and the holder 40 is placed in the mouth of the interior 48. The shell may then be welded to the housing to provide a gas-tight seal. This may be made easier by providing a mounting flange 50 about the mouth of the shell. This flange may then be welded (such as laser welding) to the housing.

As may be seen, this arrangement provides a gas-tight arrangement between the main chamber and the atmosphere, and isolates the initiator 38 from the pressure in the main chamber. However, the shell is interposed between the initiator and the main chamber, which would also interfere with heat transfer. To overcome this, the shell is formed as frangible (i.e., rupturable) upon activation of the initiator. In particular, the small amount of gas trapped in the interior 48 of the shell will increase in pressure due to the increased temperature upon activation of the initiator (together with any additional gas produced by the initiator itself). This increase in pressure will rupture the shell and permit the hot gasses to mix with the stored inert gas in the main chamber. It is noted that the connection between the holder and initiator is sufficiently gas-tight to permit the required pressure build-up in the short amount of time necessary for rupture. Further, the shell may include lines of reduced strength (typically reduced thickness) permitting more reliable rupture.

This arrangement is sufficient by itself for the heating device 32 and/or 34. However, to provide additional heat output, the arrangement shown provides further advantages. Specifically, the initiator 38 is located within the interior 48 of the shell. There is some amount of unused space in this interior, with the amount of course depending upon the relative sizes of the shell and initiator. This interior space may be filled with material 52 which will be ignited by the initiator, and thus provide increased heat output. The material 52 may be any known material which will provide the desired heat output and which is compatible with the initiator 38. For example, the material 52 may be a pyrotechnic material, such as UIX. Alternatively, the material may be a fluid fuel. As another example, the initiator may include the fluid fuel, and the material 52 may be an oxidizer, such as nitrous oxide.

In the embodiment shown, the first heating device 32 is the same size as the second heating device 34. As such, the first heating device will provide an essentially identical heat output as the second heating device. Alternatively, the heat output of the devices may be different, with the first or second heating device having a larger heat output. The controller to which the heating devices are connected will send appropriate signals to activate one, or both, of the heating devices upon sensing a collision. If both heating devices are activated, the activation may be simultaneous, or at various time delays.

As may be envisioned, the firing of the heating device(s) will heat the stored gas within the main chamber, and, depending upon the type of heating device used, may also increase the amount of inflation gas by the amount of gas produced by the heating device(s). As is known from physics, the pressure of a gas within a volume increases with temperature. As such, increasing the temperature of the stored gas increases its pressure. When the pressure has reached the predetermined value, the burst disc 22 ruptures. The heated inert gas then flows through the exit orifice to enter the cushion. The cushion receives this gas and is inflated to a cushion pressure which is sufficient to protect the vehicle occupant. The heated gas also heats the cushion.

This basic process occurs if a single one of the heating devices is activated, or if both heating devices are activated simultaneously. The only difference in operation is that the pressure and temperatures are higher if both devices are activated. The main differences occur when both heating devices are activated, but with a time delay between activations, such that the later-activated heating device is activated after rupture of the burst disc 22..

For this operating mode, computer simulation/modeling has indicated that this is a viable alternative. Specifically, while there were serious initial concerns that the gas produced by the later-activated heating device would be so hot that it would burn the cushion, this does not appear to be the case. With reference to Figs. 2-5, various properties of the inflator are shown over time for the delayed-firing situation.

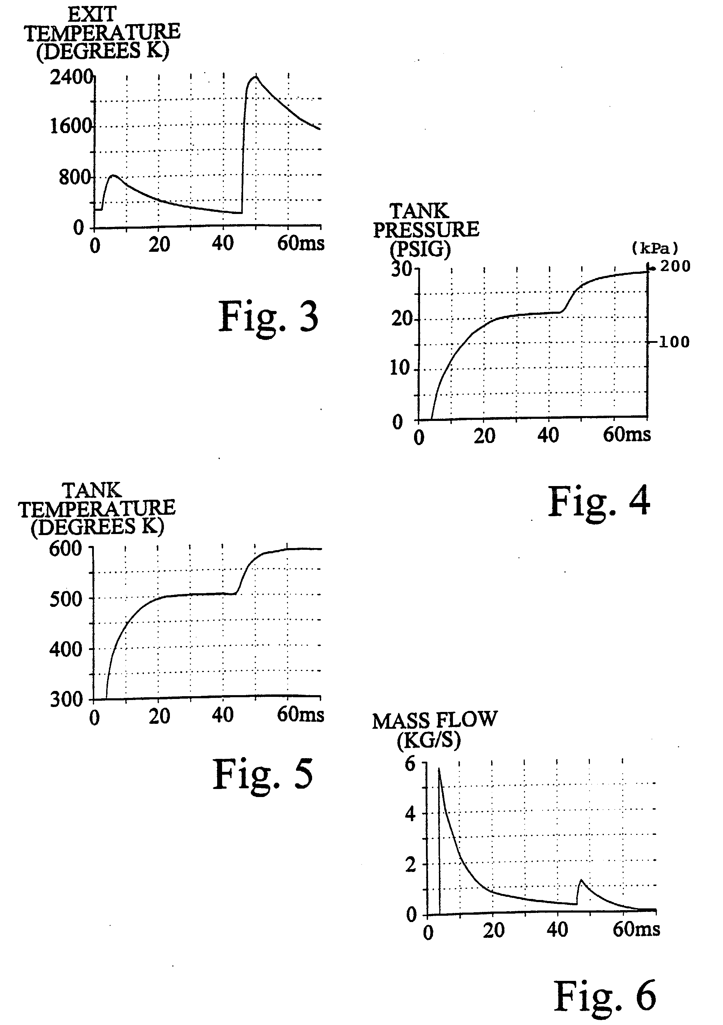

Specifically, Figs. 3 and 4 show the anticipated pressure and temperature in a firing tank (and therefore a cushion) upon activation of an inflator according to the invention. As may be seen, the pressure and temperature rise beginning about 5 milliseconds after activation of the initial heating device, when the burst disc 22 ruptures. The pressure and temperature then begin to stabilize. Thereafter, at approximately 43 milliseconds (an arbitrary time), the later-activated heating device is activated, driving the pressure and temperature higher yet.

The expected mass flow of the gas out of the inflator is illustrated in Fig. 5. As may be seen, the majority of mass flow occurs just after the rupture of the disc 22, with a minor increase during the activation of the later-activated heating device. This decrease in mass flow has a correlation in the exit temperature expected from the inflator, illustrated in Fig. 3. As shown, the exit temperature initially rises, but is not especially hot after only one heating device is activated. This is because the heat is absorbed by the stored gas, "quenching" the heat from the heating device. However, after the gas has left the inflator, it is not available to quench. As such, upon activation of the next heating device, the exit temperature from the inflator is expected to be significantly higher. It was this situation which prompted the belief that activation of the next heating device after burst disc rupture would create too much heat in the cushion, possibly burning the cushion and injuring the passenger..

As may be seen from Fig. 4, however, it is now expected that this is not the case. Specifically, it is now believed that the partially heated inert gas flows into the cushion. There the gas may still act to quench the heat of the later heating device. As such, even though the exit temperature from the inflator is very high, the temperature within the cushion is not dangerously high. Since the cushion has been inflated by the time the later heating device is activated, the cushion is spaced from the inflator, and there does not appear to be a danger of burning the cushion. As may be seen from Fig. 4, the danger to the passenger is also negligible, as the increase in cushion temperature is merely incremental.

It is noted in this regard that the amount of quenching provided by the gas is related to its molecular weight. As such, it is desired that the stored inert gas has a relatively high molecular weight. A suitable gas is argon, which is known for use as the stored inert gas.

As such, the present invention provides an adaptive hybrid inflator which may have a wide range of performance due to the activation of the later heating device after rupture of the burst disc. Further, the inflator is simple in construction, providing a single exit orifice, fill port 54, etc. to reduce cost and weight. In addition to these advantages, the inflator may be sized sufficiently small to permit installation in a steering wheel for protection of a vehicle driver. Specifically, the spherical shape of the inflator distributes stress evenly, permitting this spherical inflator to contain the stored gas at higher pressure compared to other shapes. Since the gas may be at higher pressure, the inflator may be smaller, and in particular small enough to mount to the steering wheel, yet still contain the proper amount of gas.

It is noted that this spherical inflator housing does have a substantial height compared to most driver side inflators. However, this height is only realized at the center, and rapidly lessens with radial distance outward. Further, the reduction in size permitted by the increased pressure limit allows the inflator to be mounted offset from the armature of the steering wheel (i.e., the steering wheel rotation axis). This typically permits the inflator to be mounted "deeper" in the steering wheel (i.e., further from the driver), thus reducing the amount which the inflator extends toward the driver.

From the foregoing it will be seen that this invention is one well adapted to attain all ends and objects hereinabove set forth together with the other advantages which are obvious and which are inherent to the structure.

It will be understood that certain features and subcombinations are of utility and may be employed without reference to other features and subcombinations. This is contemplated by and is within the scope of the claims.

This application is related to U.S. Patent Application 08/608,356, filed February 28, 1995, which is included herein by reference.

## Claims

1. An adaptive airbag inflation method, comprising:
providing an inflator (10) having a main chamber (18) containing a quantity of stored inert gas and first and second heating devices (32, 34), and further including an exit orifice (20) closed by a burst disc (22);
upon sensing a collision, activating one of said heating devices (32) to thereby raise the temperature and pressure of said inert gas to a level at which said burst disc (22) ruptures to cause said inert gas to flow from said main chamber (18); and
thereafter activating the remaining one of said heating devices (34) to thereby provide further heat input to said inert gas beyond said main chamber (18).

2. A method as in claim 1, wherein said step of providing an inflator (10) having a main chamber (18) further includes said chamber being defined within a housing (12, 14), said housing having the form of a sphere.

3. A method as in claim 2, wherein said step of providing an inflator (10) having a main chamber (18) further includes said spherical housing (12, 14) being sized for placement upon a steering wheel of a vehicle.

4. An adaptive airbag inflation apparatus, comprising:
an inflator (10) having a main chamber (18) containing a quantity of stored inert gas and first and second heating devices (32, 34), and further including an exit orifice (20) closed by a burst disc (22);
activating means which upon sensing a collision, activates one of said heating devices (32) to thereby raise the temperature and pressure of said inert gas to a level at which said burst disc (22) ruptures to cause said inert gas to flow from said main chamber (18) and thereafter activates the remaining one of said heating devices (34) to thereby provide further heat input to said inert gas beyond said main chamber (18).
